# EUROPÄISCHE PATENTANMELDUNG

(11) **EP 2 873 633 A2**
(43) Veröffentlichungstag der Anmeldung: **20.05.2015**
(21) Anmeldenummer: 14193739.1
(22) Anmeldetag: 18.11.2014
(51) Int. Cl.: B65G 35/06, B23Q 7/14, B65G 37/02

(54) **Werkstückträger und Montageanlage**

(30) Priorität: 19.11.2013 DE 102013112720
(71) Anmelder: teamtechnik Maschinen und Anlagen GmbH, 71691 Freiberg (DE)
(72) Erfinder: Wentsch, Siegfried, 71576 Burgstetten (DE); Freiberg, Klaus, 71711 Steinheim/Murr (DE); Kretschmer, Georg, 73635 Rudersberg (DE); Weiler, Thomas, 74379 Ingersheim (DE)
(74) Vertreter: Witte, Weller & Partner Patentanwälte mbB

(57) **Zusammenfassung**

Die Erfindung betrifft einen Werkstückträger (30) für eine Montageanlage, die zumindest ein erstes Transportsystem, ein zweites Transportsystem und ein Transfersystem zur Übergabe eines Werkstücks von einem Transportsystem zum anderen Transportsystem aufweist. Der Werkstückträger (30) weist eine Grundplatte (32), eine an der Grundplatte (32) vorgesehene Führungseinheit (36) zur Führung des Werkstückträgers (30) in zumindest einem der Transportsysteme, und eine an der Grundplatte (32) vorgesehenen Antriebskoppeleinheit (40) auf. Die Antriebskoppeleinheit (40) hat mindestens ein erstes und ein zweites Koppelelement (42, 44) für die beiden Transportsysteme und zumindest ein drittes Koppelelement (46) für das Transfersystem. Die Erfindung betrifft ferner ein Werkstückträger-Baukastensystem und eine Montageanlage mit einem Transportsystem zum Transport von Werkstückträgern.

## Beschreibung

Die vorliegende Erfindung betrifft einen Werkstückträger für eine Montageanlage, die zumindest ein erstes Transportsystem, ein zweites Transportsystem und ein Transfersystem zur Übergabe eines Werkstücks von einem Transportsystem zum anderen Transportsystem aufweist, mit einer Grundplatte, einer an der Grundplatte vorgesehenen Führungseinheit zur Führung des Werkstückträgers in zumindest einem der Transportsysteme, und einer an der Grundplatte vorgesehenen Antriebskoppeleinheit. Die Erfindung betrifft ferner ein Werkstückträger-Baukastensystem sowie eine Montageanlage mit einem ersten Transportsystem zum Transport von Werkstückträgern in einer ersten Ebene, einem zweiten Transportsystem zum Rücktransport der Werkstückträger in einer zweiten Ebene und einem Transfersystem zum Transfer des Werkstückträgers von einem Transportsystem zum anderen.

Montageanlagen und/oder Transportsysteme sind beispielsweise aus DE 20 2011 108 531 U1, DE 10 2009 011 188 A1, DE 10 2008 062 357 B4, DE 34 09 843 A1, WO 2013/034534 A1, DE 10 2006 062 530 A1, US 4 359 149 A, WO 2008/019410 A1 oder DE 195 28 922 C2 bekannt.

Montageanlagen sind allgemein bekannt und werden in den unterschiedlichsten Bereichen zur Fertigung/Montage oder dergleichen eingesetzt. Auch die Anmelderin bietet unter dem Namen "TEAMOS" prozessmodulare Montage- bzw. Fertigungsanlagen an. Typischerweise enthält eine Montageanlage mehrere Bearbeitungsstationen mit Prozessmodulen, die jeweils einen oder mehrere Bearbeitungsschritte an einem Werkstück ausführen. Der Transport zu einem Prozessmodul erfolgt über ein Transportsystem, das einen Werkstückträger mit dem zu bearbeitenden Werkstück getaktet oder nicht getaktet transportiert. Im Allgemeinen umfasst das Transportsystem angetriebene Bänder, auf denen die Werkstückträger aufliegen und transportiert werden.

Die Werkstückträger sind hierfür an das Transportsystem angepasst, mit dem Ergebnis, dass innerhalb einer Montageanlage das gleiche Transportsystem verwendet wird.

Obgleich sich solche Montageanlagen in der Praxis bewährt haben, bleibt weiterhin der Wunsch bestehen, die Flexibilität zu erhöhen, so dass der Nutzer mehr Möglichkeiten erhält, Komponenten einer Montageanlage zu kombinieren.

Diese Aufgabe wird unter anderem von dem Werkstückträger der eingangs genannten Art dadurch gelöst, dass die Antriebskoppeleinheit mindestens ein erstes und ein zweites Koppelelement für die beiden Transportsysteme und zumindest ein drittes Koppelelement für das Transfersystem aufweist.

Das heißt mit anderen Worten, dass der Werkstückträger dazu ausgelegt ist, mit mehreren Transportsystemen und einem Transfersystem zusammenzuwirken. Ein solcher Werkstückträger ermöglicht es, unterschiedliche Transportsysteme innerhalb einer Montageanlage zu kombinieren. Das erste und das zweite Koppelelement dienen dazu, den Werkstückträger für zwei unterschiedliche Transportsysteme einsetzbar zu machen, beispielsweise einerseits ein Transportband mit Nocken und andererseits ein Friktionsband. Der Werkstückträger lässt sich folglich mit zwei unterschiedlichen Transportsystemen von einem Prozessmodul zum nächsten und wieder zurück transportieren. Durch das dritte Koppelelement kann der Werkstückträger von einem Transportsystem zum nächsten in horizontaler Richtung übergeben werden oder beispielsweise aus einer Rücktransportebene nach oben in die Transportebene geführt werden.

Einer der Hauptaspekte der vorliegenden Erfindung besteht folglich darin, einen Werkstückträger so auszubilden, dass er mit zumindest zwei unterschiedlichen Transportsystemen und zumindest einem Transfersystem zusammenwirken kann. Im Zusammenhang mit der vorliegenden Erfindung wird dabei unter einem Transfersystem ein System verstanden, dass eine Übergabe eines Werkstückträgers von einem Transportsystem zu einem anderen Transportsystem in horizontaler Richtung oder auch in vertikaler Richtung übernimmt. Unter einem Transportsystem wird im Zusammenhang mit der vorliegenden Erfindung ein System verstanden, das einen Werkstückträger von Bearbeitungsstation zu Bearbeitungsstation, von Prozessmodul zu Prozessmodul oder zurück transportiert.

Bei einer bevorzugten Weiterbildung ist das erste Koppelelement des Werkstückträgers derart ausgebildet, dass es mit einem Nocken an einem Transportband eines der beiden Transportsysteme zusammenwirken kann. Besonders bevorzugt ist das erste Koppelelement so gestaltet, dass es mit dem Nocken formschlüssig zusammenwirken kann.

Diese Maßnahmen haben den Vorteil, dass eine sehr präzise Positionierung des Werkstückträgers möglich wird, wobei das formschlüssige Zusammenwirken von Koppelelement und Nocken eine sehr gute Fixierung des Werkstückträgers am Transportband gewährleistet Zudem wird die Freigabe des Werkstückträgers am Ende des Transportsystems sehr einfach durch Öffnen und Abtauchen des Nockens erreicht. Reicht die Positionierung des Werkstückträgers nicht aus, besteht die Möglichkeit einer zusätzlichen Indexierung.

In einer bevorzugten Weiterbildung weist das zweite Koppelelement des Werkstückträgers eine Kontaktfläche auf, die in Reibschlussverbindung mit einem Transportband eines der beiden Transportsysteme bringbar ist. Vorzugsweise ist die Kontaktfläche in Richtung des Transportbands federbelastet, um die Kontaktfläche mit einer in Richtung des Transportbands wirkenden Kraft zu beaufschlagen.

Insbesondere die letztgenannte Maßnahme hat den Vorteil, dass ein Werkstückträger auch über-Kopf gut transportiert werden kann. Die federbelastete Kontaktfläche wird an das Transportband gedrückt, so dass ein ausreichender Reibschluss für die Mitnahme des Werkstückträgers vorhanden ist.

Bei einer bevorzugten Weiterbildung ist ein viertes Koppelelement zur Kopplung mit einem Servomotor, insbesondere einem Linearmotor, vorgesehen.

Diese Maßnahme hat den Vorteil, dass der Werkstückträger noch flexibler einsetzbar ist, da er nun mit drei verschiedenen Transportsystemen und einem Transfersystem zusammenwirken kann.

Bei einer bevorzugten Weiterbildung ist das dritte Koppelelement zur formschlüssigen Koppelung mit einer Transferscheibe des Transportsystems für einen horizontalen und/oder vertikalen Transport ausgebildet.

Bei einer bevorzugten Weiterbildung weist die Führungseinheit zumindest ein Paar von Führungsrollen auf, wobei die Führungsrollen eines Paars in der gleichen Ebene und beabstandet zueinander angeordnet sind, derart, dass sie eine Führungsschiene des Transportsystems zwischen sich aufnehmen. Vorzugsweise sind zwei Paare von Führungsrollen vorgesehen, wobei die beiden Paare in Transportrichtung beabstandet sind.

Das heißt mit anderen Worten, dass der Werkstückträger über diese Führungseinheit geführt ist und sich lediglich in Transportrichtung bewegen kann. Eine seitliche Bewegung quer bzw. senkrecht zur Transportrichtung wird durch die Führungseinheit folglich verhindert. Dies ermöglicht einerseits eine sehr genaue Positionierung und andererseits auch einen schnellen Transport. Schließlich ermöglicht die Führungseinheit auch, den Werkstückträger in eine tieferliegende Ebene alleine durch die eigene Schwerkraft und geführt durch die Führungsschiene nach unten zu führen. Damit lässt sich ein sehr einfaches aufgebautes Transfersystem von einer Transportebene in beispielsweise eine tieferliegende Rücktransportebene realisieren.

Bei einer bevorzugten Weiterbildung ist die Antriebskoppeleinheit wechselbar an der Grundplatte angebracht.

Diese Maßnahme hat den Vorteil, dass ein Wechsel und damit ein Umrüsten auf ein weiteres Transportsystem sehr schnell und einfach möglich ist.

Die der Erfindung zugrunde liegende Aufgabe wird auch von einem Werkstückträger-Baukastensystem für eine Montageanlage mit einem erfindungsgemäßen Werkstückträger gelöst, wobei mehrere Antriebskoppeleinheiten, die unterschiedliche Kombinationen von Koppelelementen aufweisen, vorgesehen sind, wobei die Antriebskoppeleinheiten eine einheitliche Schnittstelle zur lösbaren Verbindung mit der Grundplatte des Werkstückträgers aufweisen.

Die der Erfindung zugrunde liegende Aufgabe wird auch von einer Montageanlage der eingangs genannten Art dadurch gelöst, dass das erste Transportsystem einen Riemen, insbesondere einen Zahnriemen, mit einer Vielzahl von in Transportrichtung beabstandeten Nocken aufweist, wobei jeweils zwei in Transportrichtung aufeinanderfolgende Nocken derart ausgebildet sind, dass sie den Werkstückträger zwischen sich aufnehmen können und der in Transportrichtung vordere Nocken mit einem Koppelelement des Werkstückträgers während des Transports formschlüssig zusammenwirkt.

Bei einer bevorzugten Weiterbildung ist das erste Transportsystem als getaktetes Transportsystem und das zweite Transportsystem als freiflutendes Transportsystem ausgebildet.

Weiter bevorzugt ist die erste Ebene vertikal beabstandet zu der zweiten Ebene. Das bedeutet beispielsweise, dass der Rücktransport nicht in der gleichen Ebene wie der Transport erfolgt, sondern in einer tieferliegenden Ebene.

An dieser Stelle sei jedoch angemerkt, dass die erste Ebene und die zweite Ebene die gleiche Ebene sein können, so dass Transport und Rücktransport in der gleichen Ebene erfolgen. Bei einer bevorzugten Weiterbildung weist das Transfersystem eine angetriebene Scheibe (Transferscheibe) auf, an deren Umfang Mitnahmeelemente vorgesehen sind, die mit Koppelelementen der Werkstückträger zum Transfer von einem Transportsystem zum anderen Transportsystem zusammenwirken können. Bevorzugt ist das Mitnahmeelement als Ausnehmung in der angetriebenen Scheibe ausgebildet.

Diese Maßnahmen haben den Vorteil, dass ein sehr einfacher Transfer beispielsweise zu einem Transportsystem möglich ist, wobei durch die beabstandeten Mitnahmeelemente in der Scheibe bereits ein Abstand zwischen zwei aufeinanderfolgenden Werkstücken vorgebbar ist.

Bevorzugt wird die Scheibe bzw. Transferscheibe über einen Servomotor angetrieben.

Bei einer bevorzugten Weiterbildung weist das Transportsystem eine gebogene Rollenführung auf, die die erste Ebene mit der zweiten Ebene verbindet, wobei die Führungseinheit eines Werkstückträgers mit der Rollenführung zusammenwirkt, derart, dass ein Werkstückträger entlang der Rollenführung von einer Ebene in die andere geführt ist.

Bei einer bevorzugten Weiterbildung sind mehrere Transportsysteme in einer Ebene miteinander verkettet, wobei zwischen einzelnen Transportsystemen jeweils Transfersysteme vorgesehen sind, die Werkstückträger von einem Transportsystem zum folgenden horizontal überführen. Bevorzugt weisen die mehreren Transportsysteme unterschiedliche Antriebselemente auf, die mit unterschiedlichen Koppelelementen der Werkstückträger zusammenwirken.

Wie eingangs bereits ausgeführt, ermöglichen die erfindungsgemäßen Werkstückträger gerade eine solche Kombination bzw. Verkettung von unterschiedlichen Transportsystemen, was die Flexibilität einer Montageanlage und der bereits vorhandenen Transportsysteme weiter erhöht.

Bei einer bevorzugten Weiterbildung ist ein Transfersystem zwischen zwei rechtwinklig verketteten Transportsystemen vorgesehen, die zu einer Überführung von Werkstückträgern um 90° und in der gleichen Transportebene ausgebildet sind.

Insgesamt zeigt sich, dass der erfindungsgemäße Werkstückträger die Flexibilität von Montageanlagen deutlich erhöht, da ein Werkstückträger für verschiedene Transportsysteme verwendbar ist. Darüber hinaus können die Koppelelemente der Antriebskoppeleinheit schnell und einfach ausgewechselt werden, so dass die Werkstückträger jederzeit auch umrüstbar bzw. anpassbar sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung. Dabei zeigen:
Fig. 1 eine schematische Darstellung einer Montageanlage mit mehreren Bearbeitungsstationen;
Fig. 2 eine schematische Darstellung in seitlicher Ansicht eines Transportsystems und von zwei Transfersystemen;
Fig. 3 eine schematische Darstellung mehrerer verketteter Transportsysteme mit Transfersystemen;
Fig. 4 eine schematische seitliche Darstellung eines Werkstückträgers;
Fig. 5a-c schematische Darstellungen mehrerer Koppelelemente;
Fig. 6 eine schematische Darstellung eines Transportbands eines Transportsystems;
Fig. 7a, b zwei unterschiedliche Transferscheiben, die jeweils Bestandteil eines Transfersystems sind;
Fig. 8a eine schematische perspektivische Darstellung eines Transportsystems mit einem Transfersystem am jeweiligen Ende;
Fig. 8b eine schematische Darstellung eines Transfersystems zur Übergabe eines Werkstückträgers von einem Transportsystem zum nachfolgenden in einer Ebene; und
Fig. 9a,b zwei Blockdiagramme zur Darstellung zweier Beispiele von Montageanlagen mit unterschiedlichen verketteten Transportsystemen.

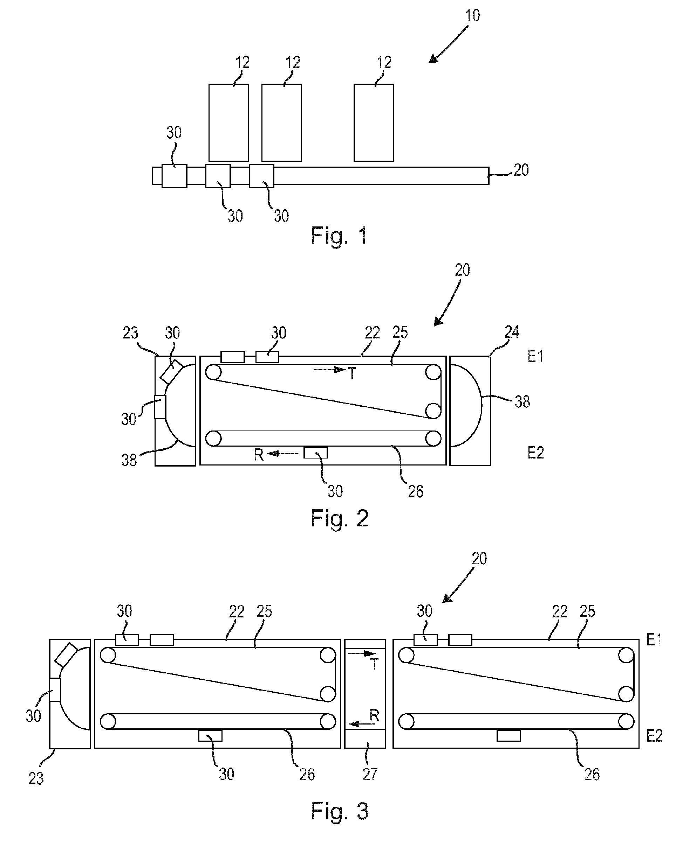

In Fig. 1 ist eine Montageanlage stark vereinfacht dargestellt und mit dem Bezugszeichen 10 gekennzeichnet. Eine solche Montageanlage 10 (auch als Fertigungsanlage oder Bearbeitungsanlage bezeichnet) dient grundsätzlich dazu, in aufeinanderfolgenden Stationen bestimmte Montageschritte, Bearbeitungsschritte oder dergleichen an einem Werkstück/Produkt vorzunehmen. Montageanlagen werden unter anderem auch im Medizinbereich eingesetzt. Die Montageanlage 10 umfasst beispielsweise zumindest eine Montage- bzw. Bearbeitungsstation 12, wobei vorzugsweise mehrere solcher Bearbeitungsstationen 12 vorgesehen sind. Eine Bearbeitungsstation 12 kann wiederum ein oder mehrere so genannte Prozessmodule aufweisen, die jeweils für zumindest einen Prozessschritt zuständig sind. Diese -aus Übersichtlichkeitsgründen nicht dargestellten- Prozessmodule können sehr einfach und schnell in entsprechende Aufnahmen in einer Bearbeitungsstation 12 eingesetzt und entnommen werden, um bspw. die Bearbeitungsstation an einen neuen Prozess anzupassen. Weitere Informationen zum Aufbau einer Bearbeitungsstation und der Prozessmodule findet sich bspw. in dem erteilten Patent DE 19758743 B4 der Anmelderin. Selbstverständlich kann eine solche Bearbeitungsstation 12 auch ein Handarbeitsplatz sein.

Die Montageanlage 10 umfasst ferner zumindest ein Transportsystem 20, das die einzelnen Bearbeitungsstationen 12 miteinander verbindet, so dass Werkstückträger 30 von einer Bearbeitungsstation 12 zur nächsten transportiert werden können. Diese Werkstückträger 30 wiederum tragen das zu bearbeitende Werkstück/Produkt.

Üblicherweise ist das gesamte Transportsystem 20 so aufgebaut, dass die Werkstückträger 30 am Ende der Transportstrecke, das heißt am Ende der Montageanlage, zurück zum Anfang der Montageanlage rücktransportiert werden. Dieser Rücktransport kann in der gleichen Ebene wie der Transport von Bearbeitungsstation zu Bearbeitungsstation erfolgen, oder aber auch bevorzugt in einer anderen, vorzugsweise tieferen Ebene.

In Fig. 2 ist ein Transportsystem schematisch in seitlicher Ansicht dargestellt. Dieses Transportsystem 20 umfasst eine Transporteinheit 22 sowie zwei Transfereinheiten 23 und 24, die jeweils an einem Ende der Transporteinheit vorgesehen sind.

Die Transporteinheit 22 weist im vorliegenden Ausführungsbeispiel ein Transportband 25 auf, das bevorzugt als Zahnriemen ausgestaltet ist. Dieses Transportband 25 ist über mehrere Rollen geführt und über einen Motor angetrieben, um die Werkstückträger 30 in Transportrichtung T zu transportieren. Dieser Transport der Werkstückträger 30 erfolgt hierbei in einer ersten Ebene E1.

Die Transporteinheit 22 umfasst ferner ein zweites Transportband 26, das den Rücktransport der Werkstückträger 30 entgegen der Transportrichtung T gewährleistet. Dieser Rücktransport in Richtung R erfolgt hierbei in einer zweiten Ebene E2, die im vorliegenden Ausführungsbeispiel bevorzugt unterhalb der Transportebene E1 liegt.

Die beiden Transfereinheiten 23 und 24 sind dafür vorgesehen, die Werkstückträger 30 einerseits von der Ebene E2 in die Ebene E1 und andererseits von der Ebene E1 in die Ebene E2 zu führen. Der Transport der Werkstückträger 30 von der Ebene E2 in die Ebene E1 erfordert einen Antrieb, während der Transfer aus der höherliegenden Ebene E1 in die darunter liegende Ebene E2 auch antriebslos alleine durch die Schwerkraft der Werkstückträger 30 bereitgestellt werden kann. Selbstverständlich kann auch hier eine angetriebene Transfereinheit verwendet werden.

In Fig. 3 ist ein weiteres Beispiel eines Transportsystems 20 dargestellt, bei dem mehrere Transporteinheiten 22 miteinander verkettet sind. Obgleich in Fig. 3 zwei miteinander verkettete Transporteinheiten 22 dargestellt sind, können selbstverständlich auch mehr als zwei Transporteinheiten 22 ein Transportsystem bilden. Zur Übergabe der Werkstückträger 30 von einer Transporteinheit 22 zur nachfolgenden Transporteinheit 22 ist eine weitere Transfereinheit 27 vorgesehen. Diese Transfereinheit 27 führt einen Werkstückträger 30 in der Ebene E1 in Transportrichtung T vom Ende einer Transporteinheit 22 zum Anfang der nächsten Transporteinheit 22. In der Ebene E2 werden die Werkstückträger 30 in Rücktransportrichtung R ebenfalls von einer Transporteinheit 22 zur nächsten Transporteinheit 22 überführt. Eine solche Transfereinheit 27 überführt folglich die Werkstückträger 30 jeweils in der gleichen Ebene (hier einer horizontalen Ebene) von einer Transporteinheit 22 zur nächsten. Diese Übergabe kann - wie in Fig. 3 gezeigt - geradlinig erfolgen, dann, wenn die beiden Transporteinheiten 22 in einer Linie hintereinander angeordnet sind. Selbstverständlich ist es auch möglich, die Transfereinheit 27 so zu gestalten, dass die Werkstückträger 30 eine Kurve durchlaufen, so dass die aufeinanderfolgenden Transporteinheiten 22 nicht notwendigerweise auf einer Linie liegen müssen. Unterschiedliche Transportrichtungen aufeinanderfolgender Transporteinheiten können folglich über eine solche entsprechend ausgestaltete Transfereinheit 27 ausgeglichen werden.

In Fig. 3 sind die beiden Transporteinheiten 22 aus Vereinfachungsgründen identisch dargestellt. An dieser Stelle sei jedoch angemerkt, dass die miteinander verketteten Transporteinheiten 22 selbstverständlich unterschiedlich ausgebildet sein können, insbesondere hinsichtlich der Art und Weise, wie die Werkstückträger 30 transportiert werden. So sind neben den gezeigten Transportbändern 25, 26, die eine Kopplung mit den Werkstückträgern beispielsweise über Nocken oder über Reibschluss herstellen, auch andere bandlose Antriebe denkbar. Zu solchen bandlosen Antrieben gehören beispielsweise Linearantriebe, die Werkstückträger antreiben können.

Das heißt mit anderen Worten, dass ein Transportsystem 20 aus mehreren Transporteinheiten 22 und Transfereinheiten aufgebaut sein kann, deren Antriebstechniken zum Transport und Transfer der Werkstückträger 30 unterschiedlich sein können.

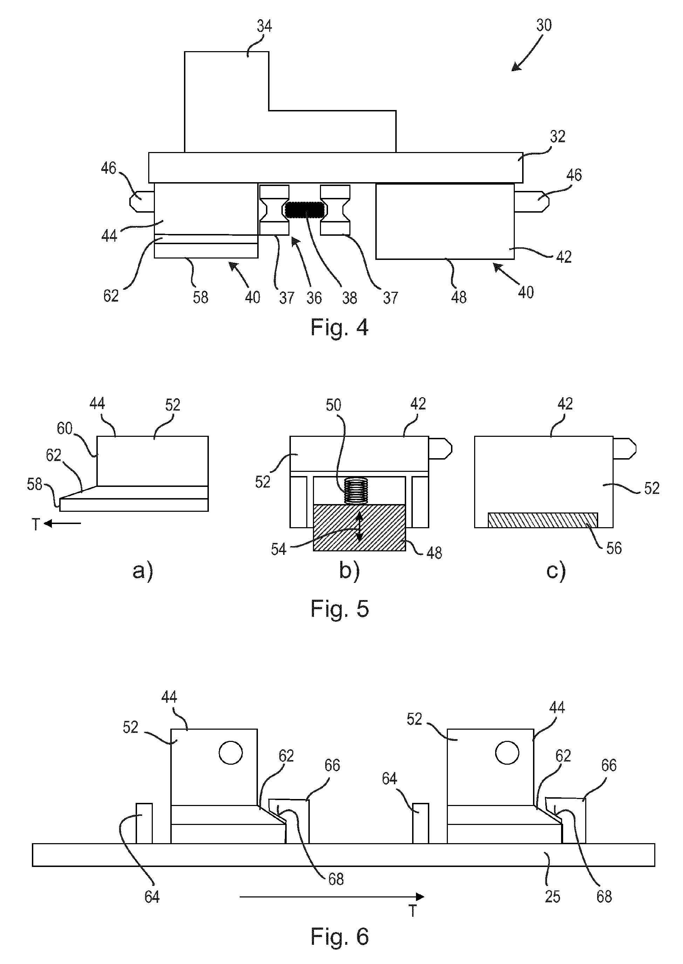

Um ein solches heterogenes Transportsystem zu ermöglichen, sind die Werkstückträger 30 entsprechend modular aufgebaut. Ein beispielhafter Aufbau eines Werkstückträgers 30 wird nachfolgend unter Bezugnahme auf die Fig. 4 erläutert.

Der Werkstückträger 30 ist in Fig. 4 in einer Frontansicht dargestellt und umfasst eine Grundplatte 32, die eine quadratische oder rechteckige Form besitzt. Auf dieser Grundplatte 32 ist eine Werkstückaufnahme 34 lösbar angebracht, wobei diese Werkstückaufnahme 34 an das jeweilige Werkstück, das transportiert werden soll, angepasst ist.

An der der Werkstückaufnahme 34 gegenüberliegenden Unterseite der Grundplatte 32 ist eine Führungseinheit 36 vorgesehen, die zumindest zwei Führungsrollen 37 aufweist. Diese beiden Führungsrollen 37 sind drehbar um eine Achse gehalten, die senkrecht zur Grundplatte 32 steht. Die beiden Drehachsen der Führungsrollen 37 sind parallel und beabstandet zueinander. In Fig. 4 ist zu erkennen, dass die beiden Führungsrollen 37 quer bzw. senkrecht zur Transportrichtung beabstandet sind, so dass sie eine Führungsschiene 38 zwischen sich aufnehmen können. Diese Führungsschiene 38 ist Bestandteil der jeweiligen Transporteinheit 22 bzw. Transfereinheit 27 und ist in Fig. 4 nur zur Verdeutlichung dargestellt, obgleich sie kein Bestandteil des Werkstückträgers 30 ist.

Mithilfe der beiden Führungsrollen 37 wird der Werkstückträger 30 in Transportrichtung geführt, derart, dass der Bewegungsspielraum in eine andere Richtung begrenzt ist. Die Führungseinheit 36 ermöglicht dadurch beispielsweise einen Überkopf-Rücktransport in der Rücktransportebene E2. "Überkopf' bedeutet in diesem Zusammenhang, dass die Werkstückaufnahme 34 unterhalb der Führungseinheit 36 liegt.

An dieser Stelle sei noch angemerkt, dass auch mehr als zwei Führungsrollen 37 vorgesehen sein können.

Um einen Transport des Werkstückträgers 30 zu ermöglichen, ist eine Koppelung zwischen einem Antrieb der Transporteinheit 22 und dem Werkstückträger 30 erforderlich. Hierfür weist der Werkstückträger 30 eine Antriebskoppeleinheit 40 auf, die vorzugsweise an der Unterseite der Grundplatte 32 angebracht ist.

Im vorliegenden Ausführungsbeispiel umfasst die Antriebskoppeleinheit 40 mehrere Koppelelemente, nämlich zumindest zwei Koppelelemente für das Zusammenwirken mit einer Transporteinheit 22 und zumindest ein Koppelelement zum Zusammenwirken mit einer Transfereinheit 27.

Die Anbringung der Antriebskoppeleinheit 40 erfolgt über einheitliche Schnittstellen an der Grundplatte 32, so dass unterschiedliche Antriebskoppeleinheiten 40 einfach anbringbar sind. Die einheitliche Schnittstelle ermöglicht zudem den Aufbau eines Baukastensystems, das unterschiedliche Antriebskoppeleinheiten 40 für unterschiedliche Antriebssysteme umfasst.

Beispielhaft sind in Fig. 4 ein erstes Koppelelement 42 rechts von der Führungseinheit 36 und ein zweites Koppelelement 44 links von der Führungseinheit 36 vorgesehen.

Schließlich sind noch zwei dritte Koppelelemente 46 vorgesehen, die seitlich gegenüber der Grundplatte 32 überstehen. Im vorliegenden Ausführungsbeispiel sind die beiden dritten Koppelelemente 46 an dem ersten 42 bzw. dem zweiten Koppelelement 44 angebracht.

Bei dem ersten Koppelelement 42 handelt es sich beispielsweise um ein Koppelelement mit einer Kontaktfläche 48, die eine Reibschlussverbindung mit dem Transportband 26 (dient in diesem Fall als Friktionsband) erzielt.

Das zweite Koppelelement 44 ist dazu ausgelegt, mit an dem Transportband 25 vorgesehenen Nocken zusammenzuwirken, um auf diese Weise angetrieben zu werden.

Das erste Koppelelement 42 ist folglich so ausgebildet, dass es mit dem Transportband 26 des Rücktransports zusammenwirkt, während das zweite Koppelelement 44 mit dem Transportband 25 für einen Transport in Transportrichtung T zusammenwirkt. Beide Koppelelemente 42, 44 sind gegenüber einer Längsachse (parallel zur Transportrichtung) des Werkstückträgers 30 versetzt angeordnet, so dass sich die beiden Koppelelemente 42, 44 nicht beeinflussen.

Wie zuvor bereits erwähnt, weist der Werkstückträger 30 dritte Koppelelemente 46 auf, die im vorliegenden Ausführungsbeispiel als Zapfen ausgebildet sind, die quer bzw. senkrecht zur Transportrichtung verlaufen und gegenüber dem Rand der Grundplatte 32 überstehen. Diese Koppelelemente 46 dienen dazu, mit entsprechenden Antriebselementen in den Transfereinheiten 23, 24 oder 27 zusammenzuwirken. Die Kopplung mit dem Antrieb erfolgt über diese dritten Koppelelemente, um beispielsweise einen Transport aus der unteren Ebene E2 in die obere Ebene E1 entlang einer Führungsschiene 38 zu ermöglichen. Auch ein Transport in horizontaler Richtung durch die Transfereinheit 27 wird über diese dritten Koppelelemente 46 ermöglicht.

Wie zuvor bereits angedeutet, kann die Antriebskoppeleinheit 40 unterschiedliche Koppelelemente umfassen, die über eine einheitliche Schnittstelle an der Grundplatte 32 anbringbar sind. In Fig. 5 sind drei unterschiedliche Koppelelemente beispielhaft gezeigt, wobei selbstverständlich weitere Koppelelemente denkbar sind.

Das erste Koppelelement 42 kann beispielsweise mit einer Kontaktfläche 48 versehen sein, wie in Fig. 5b dargestellt. Diese Kontaktfläche 48 ist über eine Feder 50 an einem Grundkörper 52 in Richtung des Pfeils 54 beweglich abgestützt. Das bedeutet, dass die Kontaktfläche 48 gegen die Federkraft der Feder 50 nach oben gedrückt werden kann. Diese Federkraft gewährleistet, dass die Kontaktfläche 48 einen guten und sicheren Reibschluss mit dem Transportband bzw. Friktionsband 26 herstellt.

In Fig. 5c ist ein erstes Koppelelement 42 gezeigt, in dessen Grundkörper 52 an seiner Unterseite ein elektromagnetisches Koppelelement 56 vorgesehen ist, beispielsweise in Form eines Magneten oder einer Spule. Dieses elektromagnetische Koppelelement 56 ermöglicht über entsprechende Baugruppen an der Transporteinheit 22 einen berührungsfreien Antrieb.

Selbstverständlich sind auch andere Koppelelemente denkbar. Darüber hinaus ist es auch denkbar, verschiedene Koppelelemente in einem Grundkörper 52 vorzusehen.

Eine Ausgestaltung eines zweiten Koppelelements 44 ist in Fig. 5a dargestellt, und zwar in einer seitlichen Ansicht. Das zweite Koppelelement 44 weist ebenfalls einen Grundkörper 52 auf, dessen unterer Abschnitt 58 gegenüber einem oberen Abschnitt 60 übersteht. Dieser Überstand erstreckt sich in Transportrichtung T, wobei sich dadurch eine schräg (gegenüber einer horizontalen Ebene) verlaufende Fläche 62 ergibt.

Die Funktion dieser schrägen Fläche 62 wird mit der schematischen Darstellung in Fig. 6 verdeutlicht. In dieser Fig. 6 ist ein Abschnitt des Transportbands 25 einer Transporteinheit 22 dargestellt, wobei an der oberen Seite des Transportbands 25 Nockenpaare 64, 66 in regelmäßigen Abständen vorgesehen sind.

Die in Transportrichtung T gesehen nacheilenden Nocken 64 sind als plattenförige Elemente vorgesehen, die sich senkrecht zum Transportband 25 erstrecken.

Die in Transportrichtung voreilenden Nocken 66 sind als hakenähnliche Elemente ausgestaltet, die eine schräg verlaufende Kontaktfläche 68 aufweisen, die an die schräge Fläche 62 des zweiten Koppelelements 44 angepasst sind. Die Nocken 66 sind mit anderen Worten dazu ausgelegt, einen Formschluss mit dem vorstehenden Bereich 58, 62 einzugehen, um eine gute Fixierung des Koppelelements und damit des gesamten Werkstückträgers 30 an dem Transportband 25 zu erzielen. Die Auflösung dieses Formschlusses wird dabei sehr einfach dadurch erreicht, dass das Transportband 25 mit den Nocken 66 am Ende der Transporteinheit 22 gekippt und nach unten weggeführt wird.

Mithilfe dieses Formschlusses zwischen Nocken und Koppelelement kann das Spiel des Koppelelements zwischen den beiden Nocken 64, 66 eines Nockenpaars reduziert werden, so dass eine bessere Wiederholgenauigkeit der Position möglich ist.

Selbstverständlich ist es auch denkbar, das zweite Koppelelement 44 anders auszugestalten, insbesondere im Grundkörper 52 andere Elemente zur Kopplung mit einem Antrieb der Transporteinheit 22 zu versehen.

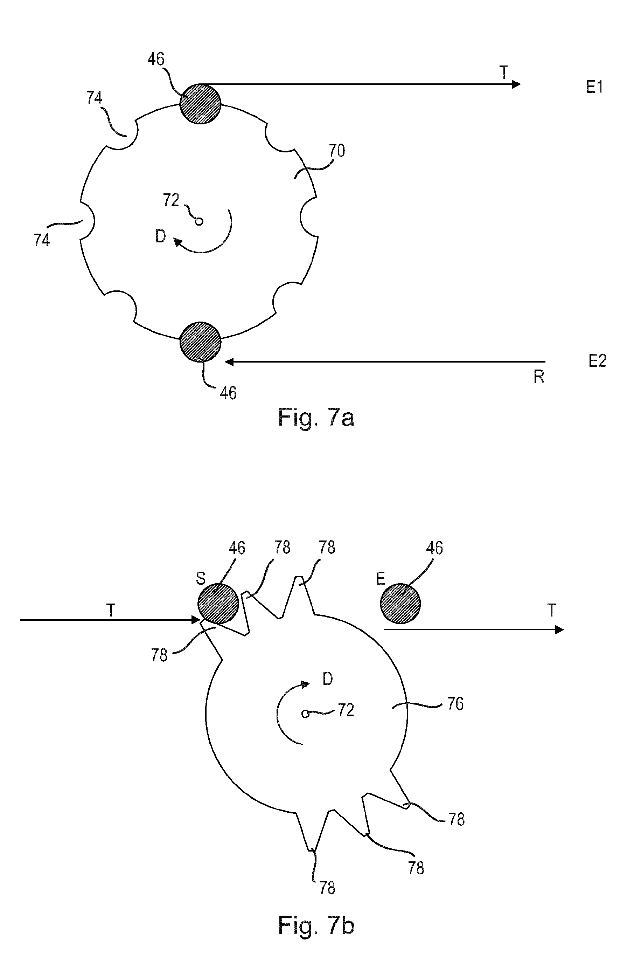

In den Fig. 7a und 7b sind nun Antriebselemente dargestellt, die in den Transfereinheiten 23 bzw. 27 vorgesehen sind und insbesondere mit den dritten Koppelelementen 46 der Werkstückträger 30 zusammenwirken.

Bei dem in Fig. 7a gezeigten Antriebselement handelt es sich um eine Transferscheibe 70, die drehbar um eine Achse 72 innerhalb der Transfereinheit gehalten ist. Die Transferscheibe 70 weist an ihrem Umfang mehrere, vorzugsweise gleichmäßig verteilte, Ausnehmungen 74 auf, die an die Form der dritten Koppelelemente 46 angepasst sind. Im vorliegenden Ausführungsbeispiel sind die Ausnehmungen 74 als halbzylinderförmige Ausnehmungen vorgesehen, deren Durchmesser etwas größer ist als der Durchmesser der im Querschnitt runden Koppelelemente 46. Die Koppelelemente 46 gelangen im unteren Bereich in der Ebene E2 in eine formschlüssig Verbindung mit einer Ausnehmung 74 der Transferscheibe 70 und können so bei einer Drehung der Transferscheibe 70 in Drehrichtung D (hier im Uhrzeigersinn) mitgenommen werden. Sobald das Koppelelement 46 und damit der gesamte Werkstückträger 30 im oberen Bereich in der Ebene E1 angekommen ist, wird der Formschluss gelöst, so dass der Weitertransport des Werkstückträgers 30 in Transportrichtung T über die entsprechende Transporteinheit 22 erfolgen kann.

Die in Fig. 7a gezeigte Transferscheibe 70 ist folglich dazu ausgelegt, einen Werkstückträger 30 entlang einer bogenförmigen Bahn von einer Ebene E2 in eine höherliegende Ebene E1 zu transferieren.

Bevorzugt sind zwei in Achsrichtung 72 beabstandete Transferscheiben 70 vorgesehen, die einen Werkstückträger 30 zwischen sich aufnehmen können. Alternativ ist es auch möglich, nur eine Transferscheibe 70 vorzusehen.

Das heißt mit anderen Worten, dass zu beiden Seiten des Werkstückträgers 30 jeweils ein drittes Koppelelement vorgesehen ist, das mit einer Transferscheibe 70 zusammenwirkt.

Damit ist ein gleichmäßigerer Transport entlang der Führungsschiene 38, die die Bewegungsbahn des Werkstückträgers 30 vorgibt, gewährleistet.

An dieser Stelle sei noch angemerkt, dass aus Übersichtlichkeitsgründen in Fig. 7a sowie auch in Fig. 7b lediglich das dritte Koppelelement 46 eines Werkstückträgers 30 gezeigt ist und der übrige Teil des Werkstückträgers 30 weggelassen ist.

Um eine Übergabe in der gleichen Ebene durch eine Transfereinheit 27 zu ermöglichen, ist eine Transferscheibe 76 drehbar um eine Achse 72 in der Transfereinheit 27 gehalten, die mehrere nach außen ragende Mitnehmer 78 aufweist. Die Mitnehmer 78 sind so ausgebildet, dass sie zwischen sich ein drittes Koppelelement 46 aufnehmen können. Die Mitnehmer 78 sind an der Transferscheibe 76 insbesondere so angebracht, dass eine Mitnahme der Koppelelemente 46 von einem Startpunkt S zu einem Endpunkt E in nahezu horizontaler Richtung möglich ist. Der gesamte Werkstückträger 30 verändert somit seine Lage in vertikaler Richtung während des Transfers im Wesentlichen nicht.

Auch hier können bevorzugt zwei in Achsrichtung 72 beabstandete Transferscheiben 76 vorgesehen sein, die einen Werkstückträger 30 zwischen sich aufnehmen und jeweils mit den an beiden Seiten angebrachten dritten Koppelelementen 46 zusammenwirken. Alternativ ist es auch möglich, nur eine Transferscheibe 76 vorzusehen.

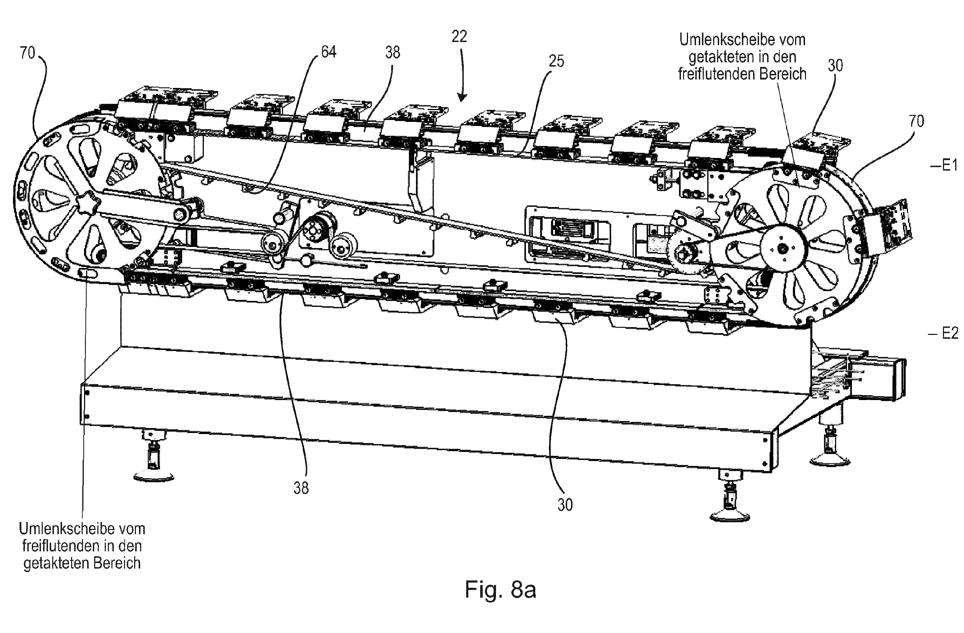

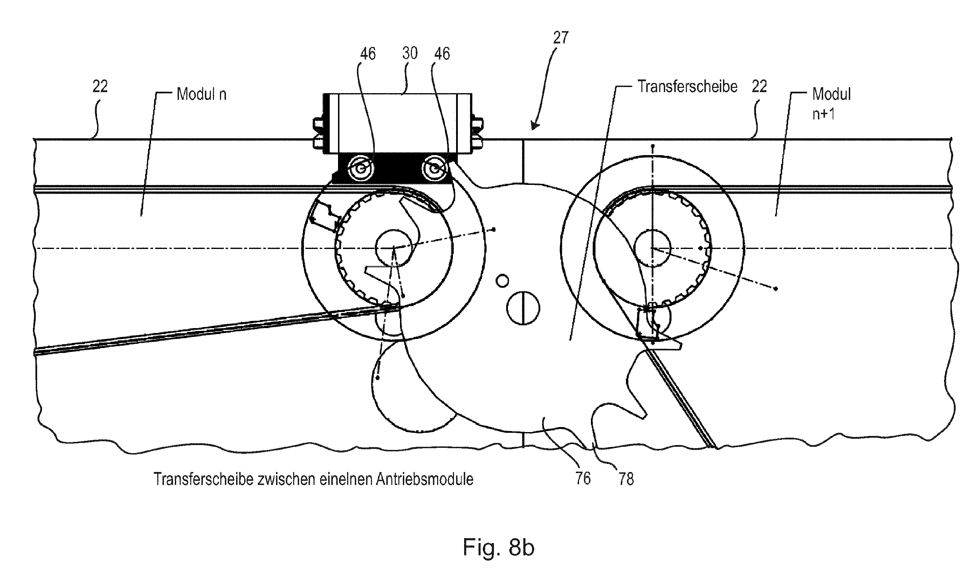

In den Fig. 8a und 8b sind konkretere Ausgestaltungen einer Transporteinheit 22 sowie zweier Transfereinheiten 27 dargestellt.

Die in Fig. 8a gezeigte Transporteinheit 22 besitzt an beiden Enden jeweils Transferscheiben 70, die einen vertikalen Transport der Werkstückträger 30 aus einer Ebene E1 in die andere Ebene E2 und umgekehrt durchführen.

Gut zu erkennen in Fig. 8a ist auch, dass die Werkstückträger 30 in der unteren Ebene E2 überkopf transportiert werden, was grundsätzlich den Vorteil hat, dass Dreck etc. im Bereich der Werkstückaufnahme 34 nach unten fällt.

Der Antrieb in Transportrichtung als auch in Rücktransportrichtung erfolgt über Transportbänder, wobei die Koppelung in Transportrichtung über Nocken 64 erfolgt, während die Koppelung im Rücktransport über Reibschluss erfolgt. In Transportrichtung ist auf diese Weise ein getakteter Transport möglich, bei dem die einzelnen Werkstückträger 30 einen vordefinierten Abstand zueinander haben, während im Rücktransport ein freiflutender Transport ohne festgegebene Abstände der Werkstückträger 30 möglich ist.

In Fig. 8b sind zwei verkettete Transporteinheiten 22 dargestellt, wobei die Übergabe eines Werkstückträgers 30 von der einen Transporteinheit 22 zur nachfolgenden Transporteinheit 22 über die Transfereinheit 27 erfolgt. Gut zu erkennen ist in dieser Figur die Transferscheibe 76 mit ihren Mitnehmern 78, die mit den dritten Koppelelementen 46 am Werkstückträger 30 zusammenwirken und den Transfer bewirken.

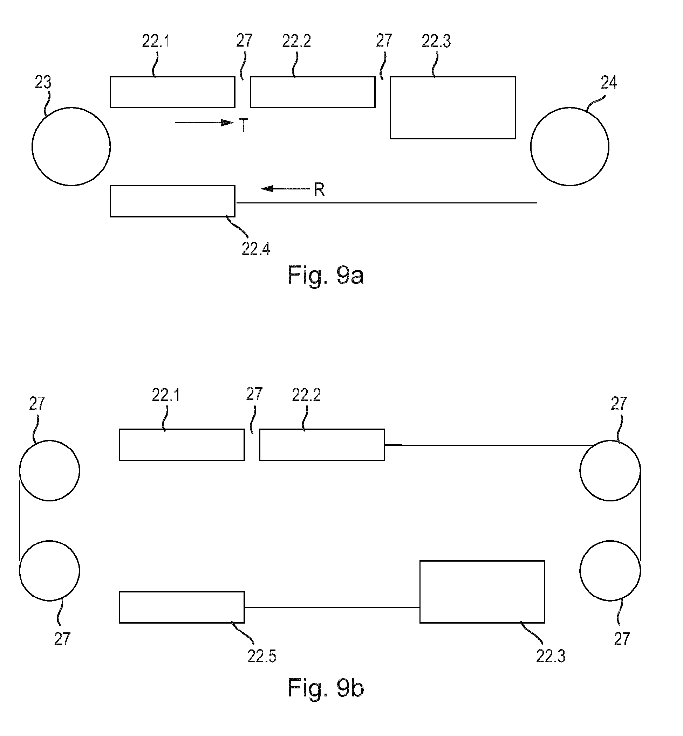

Die zuvor beschriebenen Werkstückträger 30 mit den unterschiedlichen Koppelelementen ermöglichen Montageanlagen, die unterschiedliche Transporteinheiten aufweisen können. Zwei Beispiele unterschiedlicher Montageanlagen sind in Fig. 9a und 9b gezeigt.

In Fig. 9a sind beispielsweise mehrere Transporteinheiten 22.1 bis 22.3 über Transfereinheiten 27 miteinander gekoppelt bzw. verkettet, wobei die Transporteinheit 22.1 einen getakteten Transport, die Transporteinheit 22.2 einen freiflutenden Transport und die Transporteinheit 22.3 den Transport innerhalb eines Handarbeitsplatzes durchführt. Der Rücktransport erfolgt über eine Rücktransporteinheit 22.4, beispielsweise als freiflutender Transport. Da der Rücktransport in einer tieferen Ebene erfolgt, sind an den beiden Enden der verketteten Transporteinheiten 22.1 bis 22.3 Transfereinheiten 23 bzw. 24 vorgesehen, so dass die Werkstückträger 30 von der einen Ebene in die andere Ebene gelangen können.

Bei der Montageanlage handelt es sich folglich um eine vertikale Linienanordnung.

Neben einer solchen vertikalen Linienanordnung ist auch eine horizontale Karreeanordnung möglich, bei der die Werkstückträger 30 nur in einer horizontalen Ebene bewegt werden, also kein Rücktransport in einer tieferliegenden Ebene erfolgt. Für diese Karreeanordnung sind mehrere Transfereinheiten 27 erforderlich, die die Werkstückträger 30 in einer horizontalen Ebene in einer gebogenen Bahn führen, so dass ein Rücktransport in der gleichen Ebene möglich wird.

Selbstverständlich sind andere Anordnungen mithilfe der vorgenannten Komponenten denkbar, wie bspw. eine U-Anordnung bestehend aus Teilen der Fig. 9a und 9b ohne Transfermodule 27, so dass ein mittiger Zugang in die Montageanlage gewährleistet ist.

Erfindungsgemäß ist eine Montageanlage vorgeschlagen mit einem ersten Transportsystem 22 zum Transport von Werkstückträgern 30 in einer ersten Ebene, einem zweiten Transportsystem 26 zum Rücktransport der Werkstückträger in einer zweiten Ebene und einem Transfersystem 23, 24 zum Transfer des Werkstückträgers von einem Transportsystem zum anderen, dadurch gekennzeichnet, dass das erste Transportsystem 22 einen Riemen, insbesondere einen Zahnriemen, mit einer Vielzahl von in Transportrichtung beabstandeten Nocken aufweist, wobei jeweils zwei in Transportrichtung aufeinanderfolgende Nocken derart ausgebildet sind, dass sie den Werkstückträger zwischen sich aufnehmen können und der in Transportrichtung vordere Nocken mit einem Koppelelement des Werkstückträgers während des Transports formschlüssig zusammenwirkt.

Bei der genannten Montageanlage liegt bevorzugt die erste Ebene vertikal beabstandet zu der zweiten Ebene.

Bevorzugt weist das Transfersystem 23, 24 der Montageanlage eine angetriebene Scheibe 70 aufweist, an deren Umfang Mitnahmeelemente 74 vorgesehen sind, die mit Koppelelementen der Werkstückträger zum Transfer von einem Transportsystem zum anderen Transportsystem zusammenwirken. Weiter bevorzugt ist die Mitnahmeelemente als Ausnehmungen 74 in der Scheibe ausgebildet sind. Weiter bevorzugt ist die Scheibe über einen Servomotor angetrieben.

Das Transfersystem 23, 24 der Montageanlage weist bevorzugt eine gebogene Rollenführung auf, die die erste Ebene mit der zweiten Ebene verbindet, wobei die Führungseinheit eines Werkstückträgers mit der Rollenführung zusammenwirkt, derart, dass ein Werkstückträger entlang der Rollenführung von einer Ebene in die andere geführt ist.

Bevorzugt weist die Montageanlage mehrere Transportsysteme 22; 26 auf, die in einer Ebene miteinander verkettet sind, wobei zwischen einzelnen Transportsystemen jeweils Transfersysteme vorgesehen sind, die Werkstückträger von einem Transportsystem zum folgenden horizontal überführen.Bevorzugt weisen die mehreren Transportsysteme unterschiedliche Antriebselemente auf, die mit unterschiedlichen Koppelelementen der Werkstückträger zusammenwirken. Weiter bevorzugt ist ein Transfersystem 23, 24 zwischen zwei rechtwinklig verketteten Transportsystemen vorgesehen, die für eine Überführung von Werkstückträgern um 90° und in der gleichen Transportebene ausgebildet sind.

Insgesamt zeigt sich, dass der erfindungsgemäße Werkstückträger 30 mit seiner modularen Antriebskoppeleinheit 40 mit mehreren Koppelelementen einen flexiblen Aufbau einer Montageanlage mit unterschiedlichen Antriebselementen bzw. Transporteinheiten ermöglicht.

## Patentansprüche

1. Werkstückträger für eine Montageanlage, die zumindest ein erstes Transportsystem (22), ein zweites Transportsystem (26) und ein Transfersystem (23, 24) zur Übergabe eines Werkstücks von einem Transportsystem(22) zum anderen Transportsystem (26) aufweist, mit
einer Grundplatte (32),
einer an der Grundplatte vorgesehenen Führungseinheit (36) zur Führung des Werkstückträgers (30) in zumindest einem der Transportsysteme, und
einer an der Grundplatte (32) vorgesehenen Antriebskoppeleinheit (40),
**dadurch gekennzeichnet, dass**
die Antriebskoppeleinheit (40) mindestens ein erstes und ein zweites Koppelelement (44, 42) für die beiden Transportsysteme und zumindest ein drittes Koppelelement (46) für das Transfersystem aufweist.

2. Werkstückträger nach Anspruch 1, **dadurch gekennzeichnet, dass** das erste Koppelelement (44) derart ausgebildet ist, dass es mit einem Nocken (66) an einem Transportband (25) eines der beiden Transportsysteme zusammenwirken kann.

3. Werkstückträger nach Anspruch 2, **dadurch gekennzeichnet, dass** das erste Koppelelement (44) mit dem Nocken (66) formschlüssig zusammenwirken kann.

4. Werkstückträger nach einem der Ansprüche 1 bis 3, **dadurch gekennzeichnet, dass** das zweite Koppelelement (42) eine Kontaktfläche (48) aufweist, die in Reibschlussverbindung mit einem Transportband eines der beiden Transportsysteme bringbar ist.

5. Werkstückträger nach Anspruch 4, **dadurch gekennzeichnet, dass** die Kontaktfläche (48) in Richtung des Transportbands federbelastet ist, um die Kontaktfläche mit einer in Richtung des Transportbands wirkenden Kraft zu beaufschlagen.

6. Werkstückträger nach einem der Ansprüche 1 bis 5, **dadurch gekennzeichnet, dass** ein viertes Koppelelement (56) zur Koppelung mit einem Servomotor oder einem linearen Servomotor ausgebildet ist.

7. Werkstückträger nach einem der Ansprüche 1 bis 6, **dadurch gekennzeichnet, dass** das dritte Koppelelement (46) zur formschlüssigen Koppelung mit einer Transferscheibe (70) des Transfersystems für einen horizontalen und/oder vertikalen Transport ausgebildet ist.

8. Werkstückträger nach einem der Ansprüche 1 bis 7, **dadurch gekennzeichnet, dass** die Führungseinheit (36) zumindest ein Paar von Führungsrollen (37) aufweist, wobei die Führungsrollen eines Paars in der gleichen Ebene und beabstandet zueinander angeordnet sind, derart, dass sie eine Führungsschiene (38) des Transportsystems zwischen sich aufnehmen.

9. Werkstückträger nach Anspruch 8, **dadurch gekennzeichnet, dass** zwei Paare von Führungsrollen (37) vorgesehen sind, wobei die beiden Paare in Transportrichtung beabstandet sind.

10. Werkstückträger nach einem der Ansprüche 1 bis 9, **dadurch gekennzeichnet, dass** die Antriebskoppeleinheit (40) wechselbar an der Grundplatte (32) angebracht ist.

11. Werkstückträger nach einem der Ansprüche 1 bis 10, **dadurch gekennzeichnet, dass** eine Werkstückaufnahme auf der Grundplatte (32) wechselbar angebracht ist.

12. Werkstückträger-Baukastensystem für eine Montageanlage mit einem Werkstückträger nach einem der Ansprüche 1 bis 11, und mehreren Antriebskoppeleinheiten (40), die unterschiedliche Kombinationen von Koppelelementen aufweisen, wobei die Antriebskoppeleinheiten (40) eine einheitliche Schnittstelle zur lösbaren Verbindung mit der Grundplatte (32) des Werkstückträgers aufweisen.

13. Montageanlage mit einem ersten Transportsystem (22) zum Transport von Werkstückträgern (30) nach einem der Ansprüche 1 bis 11, in einer ersten Ebene, einem zweiten Transportsystem (26) zum Rücktransport der Werkstückträger in einer zweiten Ebene und einem Transfersystem (23, 24) zum Transfer des Werkstückträgers von einem Transportsystem zum anderen, **dadurch gekennzeichnet, dass** das erste Transportsystem (22) einen Riemen, insbesondere einen Zahnriemen, mit einer Vielzahl von in Transportrichtung beabstandeten Nocken aufweist, wobei jeweils zwei in Transportrichtung aufeinanderfolgende Nocken derart ausgebildet sind, dass sie den Werkstückträger zwischen sich aufnehmen können und der in Transportrichtung vordere Nocken mit einem Koppelelement des Werkstückträgers während des Transports formschlüssig zusammenwirkt.

14. Montageanlage nach Anspruch 13, **dadurch gekennzeichnet, dass** das erste Transportsystem (22) als getaktetes Transportsystem und das zweite Transportsystem (26) als freiflutendes Transportsystem ausgebildet ist.

15. Montageanlage nach einem der Ansprüche 13 bis 14, **dadurch gekennzeichnet, dass** das Transfersystem (23, 24) eine angetriebene Scheibe (70) aufweist, an deren Umfang Mitnahmeelemente (74) vorgesehen sind, die mit Koppelelementen der Werkstückträger zum Transfer von einem Transportsystem zum anderen Transportsystem zusammenwirken.
